# EUROPEAN PATENT APPLICATION

(11) **EP 4 842 015 A1**
(43) Date of publication of application: **18.11.2026**
(21) Application number: 25175685.4
(22) Date of filing: 12.05.2025
(51) Int. Cl.: H04R 25/00, H04R 1/10, H02J 50/00

(54) **SYSTEM COMPRISING A CHARGING DEVICE AND A HEARING DEVICE**

(71) Applicant: GN Hearing A/S, 2750 Ballerup (DK)
(72) Inventor: PEDERSEN, Morten Lerstrup, 2750 Ballerup (DK); PEDERSEN, Brian Dam, 2750 Ballerup (DK); DAVIDS, Søren, 2750 Ballerup (DK); MICHAELSEN, Anders Hjermø, 2750 Ballerup (DK)
(74) Representative: Zacco Denmark A/S

(57) **Abstract**

Disclosed is a system comprising a charging device and a hearing device, wherein the charging device is configured to receive the hearing device to wirelessly charge the hearing device, wherein the hearing device comprises a first magnetic element and a first set of coils, wherein the charging device comprises a second magnetic element and a second set of coils, wherein the first magnetic element and the second magnetic element are configured for magnetically attracting each other for attaching the hearing device to the charging device, wherein the second set of coils is configured for wirelessly charging the first set of coils, when the hearing device is attached to the charging device by the first magnetic element and the second magnetic element, and wherein the first magnetic element and the second magnetic element are configured to attach at a magnet plane, and wherein the magnet plane is different from a coil plane, where the coil plane is the plane where the first set of coils and the second set of coils are aligned/arranged, when the hearing device is received by the charging device for wireless charging of the hearing device.

## Description

### FIELD

The present invention relates to a system comprising a charging device and a hearing device. More specifically, the disclosure relates to the charging device being configured to receive the hearing device to wirelessly charge the hearing device, and where the hearing device comprises a first magnetic element and a first set of coils, and where the charging device comprises a second magnetic element and a second set of coils.

### BACKGROUND

Wireless charging of for example hearing devices are becoming more popular. As hearing devices may have to be charged every night because they use a lot of power, e.g. due to the many functionalities of modern hearing devices, it is of utmost importance that the wireless charging is optimal, such that the hearing device has power all day for the benefit of the user.

Thus, there is a need for an improved charging device and hearing device for wireless charging of the hearing device.

### SUMMARY

Disclosed is a system comprising a charging device and a hearing device. The charging device is configured to receive the hearing device to wirelessly charge the hearing device. The hearing device comprises a first magnetic element and a first set of coils. The charging device comprises a second magnetic element and a second set of coils. The first magnetic element and the second magnetic element are configured for magnetically attracting each other for attaching the hearing device to the charging device. The second set of coils is configured for wirelessly charging the first set of coils, when the hearing device is attached to the charging device by the first magnetic element and the second magnetic element. The first magnetic element and the second magnetic element are configured to attach at a magnet plane. The magnet plane is different from a coil plane, where the coil plane is the plane where the first set of coils and the second set of coils are aligned/arranged, when the hearing device is received by the charging device for wireless charging of the hearing device.

The system comprises a charging device and a hearing device. The charging device may be a charging box, a charging pad, a charging case, a charging platform, a charging connector etc. The charging device is configured to receive the hearing device to wirelessly charge the hearing device. Thus, the charging device may comprise a surface, a recess, a connector etc. for receiving the hearing device. Receive may mean to act/serve as a receptacle for something, thus the charging device may serve as a receptable for the hearing device, e.g. provide space for the hearing device.

The charging device may be configured for attaching the hearing device. The charging device may be configured for connecting the hearing device. When the charging device has received the hearing device, the charging device and the hearing device may be proximate to each other, they may be adjacent to each other, they may abut each other. When the charging device has received the hearing device, the charging device and the hearing device may be located within 4 cm of each other. When the charging device has received the hearing device, the charging device and the hearing device may be arranged in stable position relative to each other, such as fixed to each other, e.g. due to a mechanical fixation or due to a magnetic attraction. Thus, when the charging device has received the hearing device e.g due to the mechanical shape of the charging device, then the charging device and the hearing device may attach to each other due to the magnetic attraction between their magnetic elements. Attach may mean to make fast, to bring in connection, to adhere etc. The magnetic attraction between the hearing device and the charging device is due to magnetism, which is the class of physical attributes that occur through a magnetic field, which allows objects to attract or repel each other.

The hearing device may be an in-the-ear (ITE) hearing device, a completely-in-canal (CIC) hearing device, a behind-the-ear (BTE) hearing device etc. The hearing device may be a hearing aid configured for compensating for a hearing loss of the user. The hearing device may be a headset configured for transmitting sound, e.g. from phone call, music, TV, podcast etc, into the ear of the user.

The hearing device comprises a first magnetic element. The first magnetic element may be a magnet. The magnet may be a permanent magnet. The first magnetic element may be made of iron, such as pure iron, or may be made of the alloy steel, which comprises iron, such as the type of steel called ferrite stainless steel.

The charging device comprises a second magnetic element. The second magnetic element may be a magnet. The magnet may be a permanent magnet. The second magnetic element may be made of iron, such as pure iron, or may be made of the alloy steel, which comprises iron, such as the type of steel called ferrite stainless steel.

The first magnetic element and the second magnetic element are configured for magnetically attracting each other for attaching the hearing device to the charging device. Thus, when the hearing device and the charging device are close together, such as within 4 cm, within 3 cm, within 2 cm, and/or within 1 cm of each other, the magnetic attraction between the first and the second magnetic element may apply or be present.

The hearing device comprises a first set of coils. The coils may be receiving coils, RX coils, for receiving charging power from the charging device to the hearing device. The first set of coils may comprise e.g. three coils.

The charging device comprises a second set of coils. The coils may be transmitting coils, TX coils, for transmitting charging power from the charging device to the hearing device. The second set of coils may comprise e.g. three coils.

The first and second set of coils may be electromagnetic coils. The electromagnetic coil may be an electrical conductor such as a wire in the shape of a coil, e.g. spiral or helix. An electric current may be passed through the wire of the coil to generate a magnetic field, or an external time-varying magnetic field through the interior of the coil may generate an electromagnetic field (EMF) (voltage) in the conductor.

Each coil may be shaped as a circle or ring. The set of coils may be arranged as evenly spaced concentric circles sharing a common center. Thus, a first coil of the set of coils may be an outer coil having the largest distance from a common center. A second coil of the set of coils may be a middle coil having the medium distance from the common center. A third coil of the set of coils may be an inner coil having the smallest distance from the common center. Thus, each of the coils of the set of coils may have a distance from the common center which is different from the distances of the other coils. The largest coil diameter and may be about 4 mm-8 mm, such as 5 mm-7 mm, such as 6 mm.

The inter-coil distance, i.e. the distance between the first and the second coil, may be the same distance as the distance between the second and the third coil. Thus, the coils may be evenly spaced. Alternatively, the inter-coil distance, i.e. the distance between the first and the second coil, may be different than the distance between the second and the third coil. Thus, the coils may be unevenly spaced. The inter-coil distance may be about 1 mm-3 mm, such as 2 mm.

Each of the coils of the set of coils may be a wire having a thickness/diameter. The thickness/diameter of each of the coils may be the same. Alternatively, the thickness/diameter of the coils may be different. The thickness/diameter of each coil may be smaller than the inter-coil distance, such as smaller than 3 mm, 2 mm, 1 mm.

The second set of coils is configured for wirelessly charging the first set of coils, when the hearing device is attached to the charging device by the first magnetic element and the second magnetic element. Thus, when the hearing device is attached to the charging device due to the magnetic attraction between the first magnetic element and the second magnetic element, the hearing device and the charging device may be close enough to each other for enabling/allowing the wireless charging of the first set of coils in the hearing device by the second set of coils in the charging device.

The hearing device may comprise a power source. The power source may comprise a battery. The battery may be a rechargeable battery. The battery may be a non-rechargeable battery. The battery may be a replaceable battery. The first set of coils of the hearing device may be connected with the battery for providing recharging of the battery.

The first magnetic element and the second magnetic element are configured to attach at a magnet plane. The magnet plane may be a plane, such as an abstract plane, defined by the interface between the first magnetic element of the hearing device and the second magnetic element of the charging device, when the hearing device and the charging device are attached to each other by the magnetic attraction between the two magnetic elements. The magnet plane may be aligned, such as parallel or coinciding, with an interface or surface(s) of the hearing device and charging device, i.e. at an interface or surface(s) of the hearing device and charging device, where the two devices abut each other, when they are arranged/positioned for performing the wireless charging. Thus, the first magnetic element and the second magnetic element may define the magnet plane, when the hearing device and the charging device are attached to each other.

The first and second magnetic elements may be square shaped elements, cylindrical shaped element, and/or disc shaped elements etc. The first and second magnetic elements may each comprise a magnet attachment surface which is the surface which is configured to attach to the other magnetic element. The magnet plane may be the plane which extends between the magnet attachment surfaces of the first and second magnetic elements.

The coil plane is the plane where the first set of coils and the second set of coils are aligned/arranged, when the hearing device is received by the charging device for wireless charging of the hearing device. The coil plane may be a plane, such as an abstract plane, defined by the interface between the first set of coils of the hearing device and the second set of coils of the charging device, when the hearing device and the charging device are attached to each other by the magnetic attraction between the two magnetic elements. The coil plane may be aligned, such as parallel or coinciding, with an interface or surface(s) of the hearing device and charging device, i.e. at an interface or surface(s) of the hearing device and charging device, where the two devices abut each other, when they are arranged/positioned for performing the wireless charging. Thus, the first set of coils and the second set of coils may define the coil plane, when the hearing device and the charging device are attached to each other.

The first and second sets of coils may be evenly spaced circles which extends in a first and second coil extension, e.g. an extension direction. The coil plane may be the plane which is between the first and the second coil extension, e.g. direction.

The magnet plane is different from the coil plane. Thus, the magnet plane and the coil plane are not the same plane, i.e. the magnet plane and the coil plane are not coinciding.

It is an advantage that the magnet plane is different from the coil plane, because this may ensure a good alignment between the hearing device and the charging device, when they are attached to each other, and a good alignment may ensure optimal wireless charging of the hearing device by the charging device. In contrast, if the hearing device and the charging device are not properly aligned, then the wireless charging may not be optimal. The wireless charging may be optimal when the first set of coils of the hearing device is exactly or substantially aligned with the second set of coils of the charging device. The first set of coils of the hearing device may exactly or substantially aligned with the second set of coils of the charging device, when the first set of coils is arranged opposite the second of coils. Thus, the first set of coils may be aligned with the second set of coils along the coil plane, and the first set of coils may be opposite the second set of coils along another plane which is perpendicular to the coil plane.

When the first set of coils of the hearing device is properly, such as optimally, aligned with the second set of coils of the charging device, then this may ensure optimal wireless charging of the hearing device by the charging device, because the first set of coils is opposite the second set of coils. In contrast, if the hearing device and the charging device are not properly aligned, then the wireless charging may not be optimal, because the first set of coils are not opposite the second set of coils.

Furthermore, when the first set of coils of the hearing device is properly, such as optimally, aligned with the second set of coils of the charging device, then there may be less electromagnetic interference between the magnetic elements and the coils.

In prior art, the magnet plane and the coil plane are the same, coinciding, overlapping, because the magnetic elements of the hearing device and charging device are arranged on the same plane as the first and second sets of coils of the hearing device and charging device, when the hearing device and charging device are attached for charging of the hearing device. This may not ensure a good alignment, as there is a risk that the first set of coils are not properly aligned with the second set of coils, because the magnetic elements may attach to each other a bit off the optimal position, and thereby the wireless charging may not be optimal.

Furthermore, the hearing device comprises the first magnetic element, such as a first primary magnetic element, and the hearing device may also comprise a first secondary magnetic element, which may also be used for magnetic attraction with a corresponding magnetic element of the charging device. The first secondary magnetic element may be a magnet. The magnet may be a permanent magnet. The first secondary magnetic element may be made of iron, such as pure iron, or may be made of the alloy steel, which comprises iron, such as the type of steel called ferrite stainless steel.

Furthermore, the charging device comprises the second magnetic element, such as a second primary magnetic element, and the charging device may also comprise a second secondary magnetic element, which may also be used for magnetic attraction with a corresponding magnetic element of the hearing device. The second secondary magnetic element may be a magnet. The magnet may be a permanent magnet. The second secondary magnetic element may be made of iron, such as pure iron, or may be made of the alloy steel, which comprises iron, such as the type of steel called ferrite stainless steel.

The attachment, connection and alignment between the hearing device and the charging device may be further improved when there are two magnetic elements in both the hearing device and the charging device.

The hearing device may have a bottom surface, which is configured to be attached/connected with the charging device for wireless charging of the hearing device. The first magnetic element may be arranged in the centre of the bottom surface, and the first set of coils may be arranged in concentric circles around the centre. Alternatively, the bottom surface of the hearing device may comprise both the first primary magnetic element and the first secondary magnetic element, as well as the first set of coils. The first set of coils may be arranged in concentric circles around a centre of the bottom surface. The first primary magnetic element and the first secondary magnetic element may then be arranged outside the first set of coils, and arranged between the first set of coils and between the edge of the bottom surface.

According to an aspect, disclosed is a hearing device configured to be worn in/at an ear of a user. The hearing device is configured to be received by a charging device for wirelessly charging the hearing device. The hearing device comprises a first magnetic element and a first set of coils. The first magnetic element is configured for magnetically attracting with a second magnetic element of the charging device for attaching the hearing device to the charging device. The first set of coils are configured to be wirelessly charged by a second set of coils of the charging device, when the hearing device is attached to the charging device by the first magnetic element magnetically attracting with the second magnetic element of the charging device. The first magnetic element is configured to attach with the second magnetic element of the charging device at a magnet plane. The magnet plane is different from a coil plane. The coil plane is the plane where the first set of coils is aligned/arranged with the second set of coils of the charging device, when the hearing device is received by the charging device for wireless charging of the hearing device.

In some embodiments, the hearing device is an in-the-ear (ITE) hearing device, a completely-in-canal (CIC) hearing device or a behind-the-ear (BTE) haring device.

According to an aspect, disclosed is a charging device configured to receive a hearing device for wirelessly charging of the hearing device. The charging device comprises a second magnetic element and a second set of coils. The second magnetic elements is configured for magnetically attracting with a first magnetic element of the hearing device for attaching the hearing device to the charging device. The second set of coils is configured for wirelessly charging a first set of coils of the hearing device, when the hearing device is attached to the charging device by the second magnetic element magnetically attracting with the first magnetic element of the hearing device. The second magnetic element is configured to attach with the first magnetic element at a magnet plane. The magnet plane is different from a coil plane. The coil plane is the plane where the second set of coils is aligned/arranged with the first set of coils of the hearing device, when the hearing device is received by the charging device for wireless charging of the hearing device.

In some embodiments, the charging device is configured for inductive charging of the hearing device. Thus, the wireless charging of the hearing device by the second set of coils of the charging device may be by means of inductive charging.

In some embodiments, the hearing device and the charging device are configured for near-field communication, NFC, being a set of communication protocols that enables communication between the hearing device and the charging device within a distance of 4 centimetres or less. NFC may use inductive coupling between two nearby loop antennas, such as the set of coils, effectively forming an air-core transformer.

In some embodiments, the near-field communication, NFC, is configured to enable the wireless charging and to support data transmission between the charging device and the hearing device. Thus, the NFC may provide both the wireless charging, also called NWL, by inductive coupling, and also provide data transmission between the hearing device and the charging device, such as software, e.g. firmware, update etc. The near-field communication, NFC, may also be configured to support data transmission between the hearing device and another device than the charging device, e.g. a platform, a fitting device etc.

Near-field communication (NFC) is a set of communication protocols that enables communication between two electronic devices over a distance of 4 centimetres or less. Like other proximity card technologies, NFC is based on inductive coupling between two electromagnetic coils present on a NFC-enabled device. NFC communicating in one or both directions uses a frequency of 13.56 MHz in the globally available unlicensed radio frequency ISM band, compliant with the ISO/IEC 18000-3 air interface standard at data rates ranging from 106 to 848 kbit/s.

NFC standards cover communications protocols and data exchange formats and are based on existing radio-frequency identification (RFID) standards including ISO/IEC 14443 and FeliCa.

Applications of NFC include contactless transactions, data exchange and simplified setup of more complex communications such as Wi-Fi. In addition, when one of the connected devices has Internet connectivity, the other can exchange data with online services.

Near-field communication (NFC) technology supports both data transmission and also enables wireless charging (NWL), providing a dual-functionality that is particularly beneficial for small, portable devices, such as hearing devices. A specific wireless charging specification has been developed, known as NFC Wireless Charging (WLC), which allows devices to charge with up to 1W of power over distances of up to 2 cm. This capability is especially suitable for smaller devices like earbuds, wearables, and other compact Internet of Things (IoT) appliances.

Compared to the more widely known Qi wireless charging standard by the Wireless Power Consortium, which offers up to 15W of power over distances up to 4 cm, NFC WLC provides a lower power output but benefits from a significantly smaller antenna size. This makes NFC WLC an ideal solution for devices where space is at a premium and high power charging is less critical.

NFC uses inductive coupling between two nearby loop antennas effectively forming an air-core transformer. Because the distances involved are tiny compared to the wavelength of electromagnetic radiation (radio waves) of that frequency (about 22 metres), the interaction is described as near field. An alternating magnetic field is the main coupling factor and almost no power is radiated in the form of radio waves (which are electromagnetic waves, also involving an oscillating electric field); that minimises interference between such devices and any radio communications at the same frequency or with other NFC devices much beyond its intended range.

In some embodiments, each of the first set of coils and the second set of coils comprise electromagnetic coils. Electromagnetic coils may be circular coils made of an electromagnetic material.

In some embodiments, the first magnetic element and the second magnetic element are configured for aligning the first set of coils with the second set of coils at the coil plane. The wireless charging may be optimal when the first set of coils of the hearing device is exactly or substantially aligned with the second set of coils of the charging device. The first set of coils of the hearing device may be exactly or substantially aligned with the second set of coils of the charging device, when the first set of coils is arranged opposite the second of coils. Thus, the first set of coils may be aligned with the second set of coils along the coil plane, and the first set of coils may be opposite the second set of coils along another plane which is perpendicular to the coil plane.

In some embodiments, the magnet plane is different from the coil plane by the magnet plane being configured to be arranged with an offset/distance/displacement relative to the coil plane in a direction extending perpendicular to the coil plane. Thus, the magnet plane is different from the coil plane. The difference between the magnet plane and the coil plane may be that the magnet plane is arranged with an offset, distance and/or displacement relative to the coil plane in a direction extending perpendicular to the coil plane. Thus, the magnet plane may be in a range of about 0.5 mm-2.5 mm from the coil plane, such as in a range of about 0.7 mm - 2.3 mm, such as in a range of about 0.9 mm-2.1 mm, such as in a range of about 1.1mm-1.9, such as in a range of about 1.3-1.7, such as in a range of about 1.5 mm.

In some embodiments, the coil plane and the magnet plane are parallel. Thus, the coil plane and the magnet plane may be parallel to each other. The coil plane and the magnet plane may be parallel relative to in an insertion direction of the hearing device into the charging device. The coil plane and the magnet plane may be parallel relative to a direction extending perpendicular to the coil plane.

In some embodiments, the coil plane intersects the first magnetic element or the second magnetic element. Thus, the coil plane may intersect the first magnetic element of the hearing device, i.e. the coil plane intersects the hearing device, or the coil plane may intersect the second magnetic element of the charging device, i.e. the coil plane intersects the charging device.

In some embodiments, the first magnetic element is arranged in a protrusion in a housing of the hearing device, and the second magnetic element is arranged in a recess in the body of the charging device, whereby the magnet plane is protruding or indented relative to the coil plane. When the first magnetic element is arranged in a protrusion in the housing of the hearing device, then the first set of coils may be arranged outside the protrusion of the hearing device. When the second magnetic element is arranged in a recess in the body of the charging device, then the second set of coils may be arranged outside the recess of the body of the charging device.

In some embodiments, the first magnetic element is arranged in a recess in a housing of the hearing device, and the second magnetic element is arranged in a protrusion in the body of the charging device, whereby the magnet plane is protruding or indented relative to the coil plane. When the first magnetic element is arranged in a recess in the housing of the hearing device, then the first set of coils may be arranged outside the recess of the hearing device. When the second magnetic element is arranged in a protrusion in the body of the charging device, then the second set of coils may be arranged outside the protrusion of the body of the charging device.

In some embodiments, the charging device comprises a connection interface, wherein the connection interface comprises the second magnetic element and the second set of coils, and wherein the hearing device comprises a faceplate, wherein the faceplate comprises the first magnetic element and the first set of coils, and wherein outside surfaces of the connection interface and the faceplate are configured to abut each other at a surface plane; and wherein, at the positions of the first and second sets of coils, the coil plane is aligned with the surface plane, and the magnet plane is un-aligned with the surface plane.

The connection interface of the charging device may be in the body of the charging device. The faceplate of the hearing device may be in a protrusion of the hearing device.

The outside surfaces of the connection interface and the faceplate are configured to abut each other at a surface plane, where the surface plane may be an abstract plane defined by the outside surfaces of the hearing device and the charging device, when the devices are attached to each other.

At the positions of the first and second sets of coils, the coil plane is aligned with the surface plane, and the magnet plane is un-aligned with the surface plane. The magnet plane being un-aligned with the surface plane may mean that the magnet plane is displaced or offset relative to the surface plane.

Furthermore, at the positions of the first and second magnetic elements, another surface plane may be aligned with the magnet plane.

In some embodiments, a transition at the outside surfaces of the connection interface and the faceplate between the coil plane and the magnet plane is square-shaped or rounded or tapered in a cross sectional view. The transition may be the change/design in the mechanical shape of the surfaces, e.g. at a protrusion or recess in the hearing device and/or charging device. The transition, e.g. the shape of the transition, may ensure a good connection between the hearing device and the charging device. When the transition has a specific shape, e.g. square-shaped or rounded or tapered, then the hearing device and the charging device may only be attached or connected when they match at the specific shape. A specific shape at the transition may thus ensure a specific mechanical connection, and thereby a good alignment and thereby optimal wireless charging of the hearing device by the charging device. Due to the transition, there may only be one possible attachment arrangement between the hearing device and the charging device, and thereby the mechanical shape ensures that the first set of coils of the hearing device is properly aligned with the second set of coils of the charging device, and thus that the wireless charging is optimal, when the hearing device is attached to the charging device.

In an embodiment, a hearing device is configured to be worn by a user. The hearing device may be arranged at the user's ear, on the user's ear, over the user's ear, in the user's ear, in the user's ear canal, behind the user's ear and/or in the user's concha, i.e., the hearing device is configured to be worn in, on, over and/or at the user's ear. The user may wear two hearing devices, one hearing device at each ear. The two hearing devices may be connected, such as wirelessly connected and/or connected by wires, such as a binaural hearing aid system.

The hearing device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

The hearing device may be embodied in various housing styles or form factors. Some of these form factors are Behind-the-Ear (BTE) hearing device, Receiver-in-Canal (RIC) hearing device, Receiver-in-Ear (RIE) hearing device or Microphone-and-Receiver-in-Ear (MaRIE) hearing device. These devices may comprise a BTE unit configured to be worn behind the ear of the user and an in the ear (ITE) unit configured to be inserted partly or fully into the user's ear canal. Generally, the BTE unit may comprise at least one input transducer, a power source and a processing unit. The term BTE hearing device refers to a hearing device where the receiver, i.e. the output transducer, is comprised in the BTE unit and sound is guided to the ITE unit via a sound tube connecting the BTE and ITE units, whereas the terms RIE, RIC and MaRIE hearing devices refer to hearing devices where the receiver may be comprise in the ITE unit, which is coupled to the BTE unit via a connector cable or wire configured for transferring electric signals between the BTE and ITE units.

Some of these form factors are In-the-Ear (ITE) hearing device, Completely-in-Canal (CIC) hearing device or Invisible-in-Canal (IIC) hearing device. These hearing devices may comprise an ITE unit, wherein the ITE unit may comprise at least one input transducer, a power source, a processing unit and an output transducer. These form factors may be custom devices, meaning that the ITE unit may comprise a housing having a shell made from a hard material, such as a hard polymer or metal, or a soft material such as a rubber-like polymer, molded to have an outer shape conforming to the shape of the specific user's ear canal.

Some of these form factors are earbuds, on the ear headphones or over the ear headphones. The person skilled in the art is well aware of different kinds of hearing devices and of different options for arranging the hearing device in, on, over and/or at the ear of the hearing device wearer. The hearing device (or pair of hearing devices) may be custom fitted, standard fitted, open fitted and/or occlusive fitted.

In an embodiment, the hearing device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In an embodiment, the hearing device may comprise one or more antenna(s) configured for wireless communication. The one or more antenna(s) may comprise an electric antenna. The electric antenna may be configured for wireless communication at a first frequency. The first frequency may be above 800 MHz, preferably a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antenna(s) may comprise a magnetic antenna. The magnetic antenna may comprise a magnetic core. The magnetic antenna may comprise a coil. The coil may be coiled around the magnetic core. The magnetic antenna may be configured for wireless communication at a second frequency. The second frequency may be below 100 MHz. The second frequency may be between 9 MHz and 15 MHz.

In an embodiment, the hearing device may comprise one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communication unit(s) may be coupled to the one or more antenna(s). The wireless communication unit may be configured for converting a wireless signal received by at least one of the one or more antenna(s) into a second electric input signal. The hearing device may be configured for wired/wireless audio communication, e.g. enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from another hearing device, e.g., as part of a binaural hearing system and/or from one or more accessory device(s), such as a smartphone and/or a smart watch.

In an embodiment, the hearing device may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In an embodiment, the hearing device may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g. Receiver-in-Ear (RIE) unit or Microphone-and-Receiver-in-Ear (MaRIE) unit, of the hearing device. One or more of the input transducer(s) may be comprised in an ITE unit or in an earpiece.

In an embodiment, the wireless communication unit may be configured for converting the second electric output signal into a wireless output signal. The wireless output signal may comprise synchronization data. The wireless communication unit may be configured for transmitting the wireless output signal via at least one of the one or more antennas.

In an embodiment, the hearing device may comprise a digital-to-analogue converter configured to convert the first electric output signal, the second electric output signal and/or the wireless output signal into an analogue signal.

In an embodiment, the hearing device may comprise a vent. A vent is a physical passageway such as a canal or tube primarily placed to offer pressure equalization across a housing placed in the ear such as an ITE hearing device, an ITE unit of a BTE hearing device, a CIC hearing device, a RIE hearing device, a RIC hearing device, a MaRIE hearing device or a dome tip/earmold. The vent may be a pressure vent with a small cross section area, which is preferably acoustically sealed. The vent may be an acoustic vent configured for occlusion cancellation. The vent may be an active vent enabling opening or closing of the vent during use of the hearing device. The active vent may comprise a valve.

In an embodiment, the hearing device may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

In an embodiment, the hearing device may comprise a memory, including volatile and nonvolatile forms of memory.

The present invention relates to different aspects including the system, the hearing device and the charging device described above and in the following, and corresponding device parts, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1a and 1b schematically illustrates an exemplary system comprising a charging device and a hearing device.
Fig. 2a, 2b, 2c and 2d schematically illustrate an exemplary hearing device from different perspectives.
Fig. 3 schematically illustrates an exemplary system comprising a charging device and a hearing device in a partly cross-sectional view.
Fig. 4a, 4b, 4c and 4d schematically illustrate an exemplary system comprising a charging device and a hearing device.
Fig. 5 shows an example of prior art.
Fig 6a and 6b illustrate the improvement over prior art.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

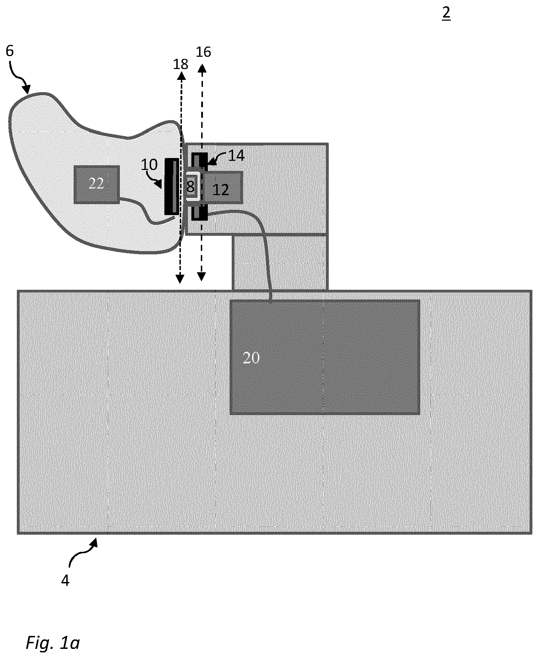

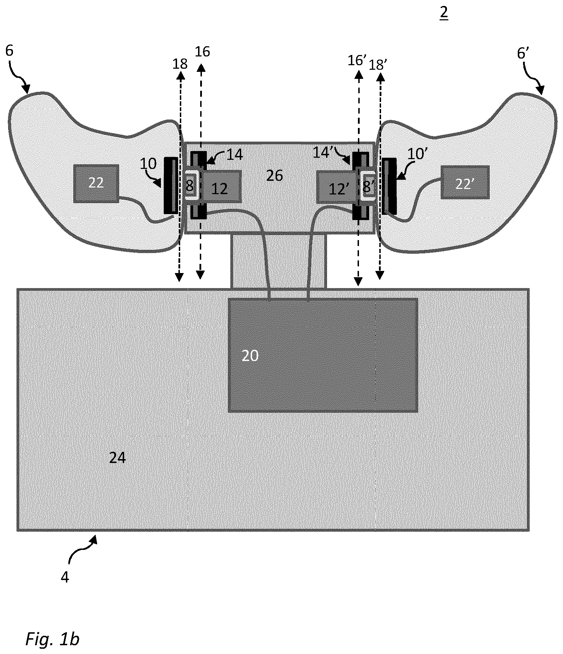

Fig. 1a and 1b schematically illustrates an exemplary system 2 comprising a charging device 4 and a hearing device 6. The charging device 4 is configured to receive the hearing device 6 to wirelessly charge the hearing device 6. The hearing device 6 comprises a first magnetic element 8 and a first set of coils 10. The charging device 4 comprises a second magnetic element 12 and a second set of coils 14. The first magnetic element 8 and the second magnetic element 12 are configured for magnetically attracting each other for attaching the hearing device 6 to the charging device 4. The second set of coils 14 is configured for wirelessly charging the first set of coils 10, when the hearing device 6 is attached to the charging device 4 by the first magnetic element 8 and the second magnetic element 12. The first magnetic element 8 and the second magnetic element 12 are configured to attach at a magnet plane 16. The magnet plane 16 is different from a coil plane 18, where the coil plane 18 is the plane where the first set of coils 10 and the second set of coils 14 are aligned/arranged, when the hearing device 6 is received by the charging device 4 for wireless charging of the hearing device 6.

The first and second magnetic elements 8, 12 are square shaped elements, cylindrical shaped element, and/or disc shaped elements etc. The first and second magnetic elements 8, 12 each comprises a magnet attachment surface which is the surface which is configured to attach to the other magnetic element. The magnet plane 16 is the plane which extends between the magnet attachment surfaces of the first and second magnetic elements 8, 12.

The first and second sets of coils 10, 14 are evenly spaced circles which extends in a first and second coil extension direction. The coil plane 18 is the plane which is between the first and the second coil extension directions.

Fig. 1b further shows a second hearing device 6' attached to the charging device 4. Thus, the hearing device 6 may be named the first hearing device 6. The charging device 4 is configured to also receive the second hearing device 6' to wirelessly charge the second hearing device 6'. The second hearing device 6' comprises a first magnetic element 8' and a first set of coils 10'. The charging device 4 comprises a second magnetic element 12' and a second set of coils 14'. The first magnetic element 8' and the second magnetic element 12' are configured for magnetically attracting each other for attaching the second hearing device 6' to the charging device 4. The second set of coils 14' is configured for wirelessly charging the first set of coils 10', when the second hearing device 6' is attached to the charging device 4 by the first magnetic element 8' and the second magnetic element 12'. The first magnetic element 8' and the second magnetic element 12' are configured to attach at a magnet plane 16'. The magnet plane 16' is different from a coil plane 18', where the coil plane 18' is the plane where the first set of coils 10' and the second set of coils 14' are aligned/arranged, when the second hearing device 6' is received by the charging device 4 for wireless charging of the second hearing device 6'.

Thus, the charging device 4 is configured for wireless charging of one and/or two hearing devices 6, 6', such as a first hearing device 6 for the user's left ear and another second hearing device 6' for the user's right ear.

The charging device 4 comprises a NFC transceiver, TX, chip 20, which comprises power and data management, such as NFC protocol. The NFC transceiver, TX, chip 20 is connected with the second set of coils 14, 14' of the charging device 4.

The charging device 4 comprises a platform 24, where the NFC transceiver, TX, chip 20 is arranged. The charging device 4 comprises a connecter part 26, where the second magnetic elements 12, 12' and the second set of coils 14, 14' are arranged. The platform 24 is configured to be arranged on a table. The connector part 26 is arranged on the platform 24. The hearing device 6, 6' is configured to be connected/attached/arranged on a surface of the connector part 26, such as on a vertical surface, as shown in fig. 1a and 1b, or such as on a horizontal surface.

The hearing device 6, 6' comprises a power source, such as a battery 22, 22'. The battery 22, 22' may be a rechargeable battery. The battery may be a replaceable battery. The first set of coils 10, 10' of the hearing device 6, 6' are connected with the battery 22, 22' for providing recharging of the battery 22, 22'.

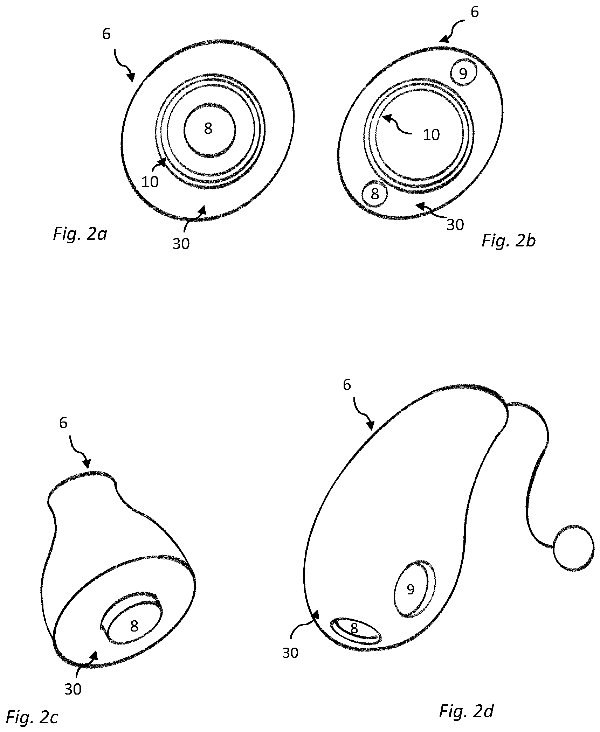

Fig. 2a, 2b, 2c and 2d schematically illustrate an exemplary hearing device 6 from different perspectives.

Fig. 2a and 2b show a hearing device 6 in a cross-sectional bottom view, which shows the surface 30 of the hearing device 6 which is configured to be attached/connected with the charging device for wireless charging of the hearing device 6.

Fig. 2a shows the surface 30 of the hearing device 6 comprising a first magnetic element 8 and a first set of coils 10. The first magnetic element 8 is arranged in the centre of the surface 30, and the first set of coils 10 are arranged in concentric circles around the centre.

Fig. 2b shows the surface 30 of the hearing device 6 comprising a first primary magnetic element 8, a first secondary magnetic element 9, and a first set of coils 10. The first set of coils 10 are arranged in concentric circles around a centre of the surface 30, and the first primary magnetic element 8 and the first secondary magnetic element 9 are arranged outside the first set of coils 10, and arranged between the first set of coils and between the edge of the surface 30.

Fig. 2c and 2d show a hearing device 6 in an bottom view, which shows the surface 30 of the hearing device 6 which is configured to be attached/connected with the charging device for wireless charging of the hearing device 6.

Fig. 2c shows the surface 30 of the hearing device 6 comprising a first magnetic element 8. The first set of coils are not visible. The first magnetic element 8 is arranged in the centre of the surface 30, and the first set of coils are arranged in concentric circles around the centre.

Fig. 2d shows the surface 30 of the hearing device 6 comprising a first primary magnetic element 8 and a first secondary magnetic element 9 pointing inwards instead of outwards as shown in e.g. fig. 2c. The first set of coils are not visible. The first set of coils arranged in concentric circles around a centre inside the device as shown in fig. 2b, and the first primary magnetic element 8 and the first secondary magnetic element 9 are arranged outside the first set of coils.

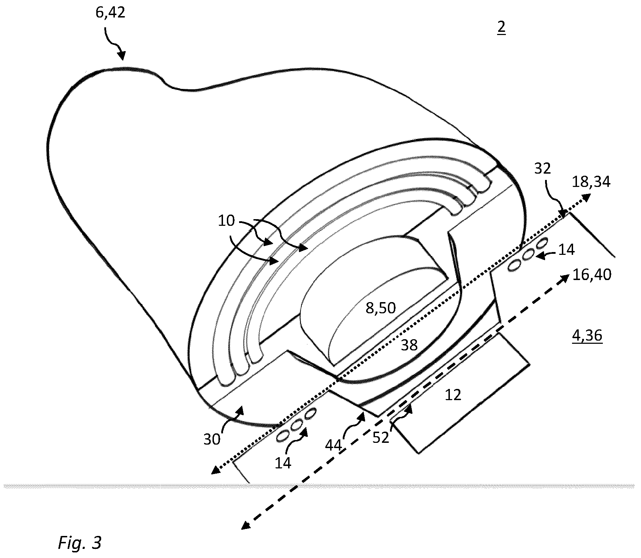

Fig. 3 schematically illustrates an exemplary system 2 comprising a charging device 4 and a hearing device 6 in a partly cross-sectional view. The charging device 4 is configured to receive the hearing device 6 to wirelessly charge the hearing device 6. The hearing device 6 comprises a first magnetic element 8 and a first set of coils 10. The charging device 4 comprises a second magnetic element 12 and a second set of coils 14. The first magnetic element 8 and the second magnetic element 12 are configured for magnetically attracting each other for attaching the hearing device 6 to the charging device 4. The second set of coils 14 is configured for wirelessly charging the first set of coils 10, when the hearing device 6 is attached to the charging device 4 by the first magnetic element 8 and the second magnetic element 12. The first magnetic element 8 and the second magnetic element 12 are configured to attach at a magnet plane 16. The magnet plane 16 is different from a coil plane 18, where the coil plane 18 is the plane where the first set of coils 10 and the second set of coils 14 are aligned/arranged, when the hearing device 6 is received by the charging device 4 for wireless charging of the hearing device 6.

The first 10 and second 14 set of coils are electromagnetic coils. The electromagnetic coil is an electrical conductor such as a wire in the shape of a coil, e.g. spiral or helix.

Each coil is be shaped as a circle or ring. The set of coils 10, 14 are arranged as evenly spaced concentric circles sharing a common center. Thus, a first coil of the set of coils 10, 14 is an outer coil having the largest distance from a common center. A second coil of the set of coils 10, 14 is a middle coil having the medium distance from the common center. A third coil of the set of coils 10, 14 is an inner coil having the smallest distance from the common center. Thus, each of the coils of the set of coils 10, 14 have a distance from the common center which is different from the distances of the other coils.

The inter-coil distance, i.e. the distance between the first and the second coil, is the same distance as the distance between the second and the third coil. Thus, the coils are evenly spaced. Alternatively, the inter-coil distance, i.e. the distance between the first and the second coil, may be different than the distance between the second and the third coil. Thus, the coils may be unevenly spaced.

Each of the coils of the set of coils 10, 14 is a wire having a thickness/diameter. The thickness/diameter of each of the coils is the same. Alternatively, the thickness/diameter of the coils may be different.

The first magnetic element 8 and the second magnetic element 12 are configured to attach at a magnet plane 16. The magnet plane 16 is a plane, such as an abstract plane, defined by the interface between the first magnetic element 8 of the hearing device 6 and the second magnetic element 12 of the charging device 4, when the hearing device 6 and the charging device 4 are attached to each other by the magnetic attraction between the two magnetic elements 8, 12. The magnet plane 16 is aligned, such as parallel or coinciding, with an interface or surface(s) of the hearing device 6 and charging device 4, i.e. at an interface or surface(s) of the hearing device 6 and charging device 4, where the two devices 4, 6 abut each other, when they are arranged/positioned for performing the wireless charging. Thus, the first magnetic element 8 and the second magnetic element 12 define the magnet plane 16, when the hearing device 6 and the charging device 4 are attached to each other.

The coil plane 18 is the plane where the first set of coils 10 and the second set of coils 14 are aligned/arranged, when the hearing device 6 is received by the charging device 4 for wireless charging of the hearing device 6. The coil plane 18 is a plane, such as an abstract plane, defined by the interface between the first set of coils 10 of the hearing device 6 and the second set of coils 14 of the charging device 4, when the hearing device 6 and the charging device 4 are attached to each other by the magnetic attraction between the two magnetic elements 8, 12. The coil plane 18 is aligned, such as parallel or coinciding, with an interface or surface(s) of the hearing device 6 and charging device 4, i.e. at an interface or surface(s) of the hearing device 6 and charging device 4, where the two devices 4, 6 abut each other, when they are arranged/positioned for performing the wireless charging. Thus, the first set of coils 10 and the second set of coils 14 define the coil plane 18, when the hearing device 6 and the charging device 4 are attached to each other.

The first and second magnetic elements 8, 12 are square shaped elements cylindrical shaped element, and/or disc shaped elements etc. The first and second magnetic elements 8, 12 each comprise a magnet attachment surface 50, 52, respectively, which is the surface which is configured to attach to the other magnetic element. The magnet plane 16 is the plane which extends between the magnet attachment surfaces 50, 52 of the first and second magnetic elements 8, 12.

The first and second sets of coils 10, 14 are evenly spaced circles which extend in a first and second coil extension direction. The coil plane 18 is the plane which is between the first and the second coil extension directions.

The magnet plane 16 is different from the coil plane 18. Thus, the magnet plane 16 and the coil plane 18 are not the same plane, i.e. the magnet plane 16 and the coil plane 18 are not coinciding.

The charging device 4 comprises a connection interface 32, wherein the connection interface 32 comprises the second magnetic element 12 and the second set of coils 14. The hearing device 6 comprises a faceplate or bottom surface 30, wherein the faceplate/ bottom surface 30 comprises the first magnetic element 8 and the first set of coils 10. Outside surfaces of the connection interface 32 and the faceplate/ bottom surface 30 are configured to abut each other at a surface plane 34. At the positions of the first 10 and second 14 sets of coils, the coil plane 18 is aligned with the surface plane 34, and the magnet plane 16 is un-aligned with the surface plane 34.

The connection interface 32 of the charging device 4 is in the body 36 the charging device 4. The faceplate/ bottom surface 30 of the hearing device 6 is in a protrusion 38 of the hearing device 6.

The outside surfaces of the connection interface 32 and the faceplate/ bottom surface 30 are configured to abut each other at a surface plane 34, where the surface plane 34 is an abstract plane defined by the outside surfaces of the hearing device 6 and the charging device 4, when the devices 4, 6 are attached to each other.

At the positions of the first 10 and second 14 sets of coils, the coil plane 18 is aligned with the surface plane 34, and the magnet plane 16 is un-aligned with the surface plane 34. The magnet plane 16 being un-aligned with the surface plane 34 means that the magnet plane 16 is displaced or offset relative to the surface plane 34.

Furthermore, at the positions of the first 8 and second 12 magnetic elements, another surface plane 40 is aligned with the magnet plane 16.

The first magnetic element 8 is arranged in a protrusion 38 in a housing 42 of the hearing device 6, and the second magnetic element 12 is arranged in a recess 44 in the body 36 of the charging device 4, whereby the magnet plane 16 is protruding or indented relative to the coil plane 18. When the first magnetic element 8 is arranged in a protrusion 38 in the housing 42 of the hearing device 6, then the first set of coils 10 is arranged outside the protrusion 38 of the hearing device, as shown in the figures. When the second magnetic element 12 is arranged in a recess 44 in the body 36 of the charging device 4, then the second set of coils 14 is arranged outside the recess 44 of the body 36 of the charging device 4, as shown in the figures.

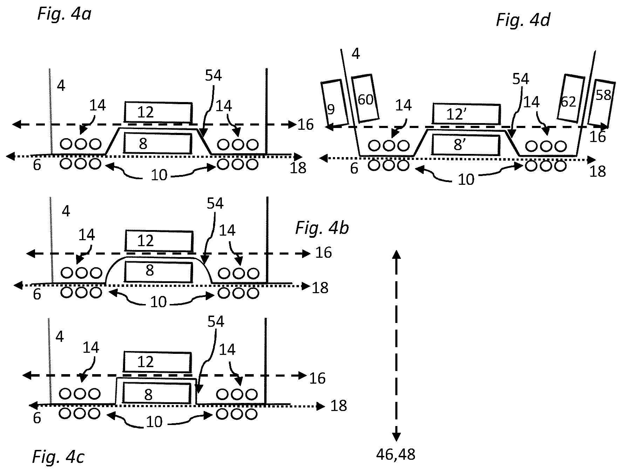

Fig. 4a, 4b, 4c and 4d schematically illustrate an exemplary system comprising a charging device 4 and a hearing device 6. The charging device 4 is configured to receive the hearing device 6 to wirelessly charge the hearing device 6. The hearing device 6 comprises a first magnetic element 8 and a first set of coils 10. The charging device 4 comprises a second magnetic element 12 and a second set of coils 14. The first magnetic element 8 and the second magnetic element 12 are configured for magnetically attracting each other for attaching the hearing device 6 to the charging device 4. The second set of coils 14 is configured for wirelessly charging the first set of coils 10, when the hearing device 6 is attached to the charging device 4 by the first magnetic element 8 and the second magnetic element 12. The first magnetic element 8 and the second magnetic element 12 are configured to attach at a magnet plane 16. The magnet plane 16 is different from a coil plane 18, where the coil plane 18 is the plane where the first set of coils 10 and the second set of coils 14 are aligned/arranged, when the hearing device 6 is received by the charging device 4 for wireless charging of the hearing device 6.

The first magnetic element 8 and the second magnetic element 12 are configured for aligning the first set of coils 10 with the second set of coils 14 at the coil plane 18. The wireless charging is optimal when the first set of coils 10 of the hearing device 6 is exactly or substantially aligned with the second set of coils 14 of the charging device 4. The first set of coils 10 of the hearing device 6 is exactly or substantially aligned with the second set of coils 14 of the charging device 4, when the first set of coils 10 is arranged opposite the second set of coils 14. Thus, the first set of coils 10 is aligned with the second set of coils 14 along the coil plane 18, and the first set of coils 10 is opposite the second set of coils 14 along another plane which is perpendicular to the coil plane.

The magnet plane 16 is different from the coil plane 18 by the magnet plane 16 being configured to be arranged with an offset/distance/displacement relative to the coil plane 18 in a direction extending perpendicular 46 to the coil plane 18.

The coil plane 18 and the magnet plane 16 are parallel. Thus, the coil plane 18 and the magnet plane 16 are parallel to each other. The coil plane 18 and the magnet plane 16 are parallel relative to in an insertion direction 48 of the hearing device 6 into the charging device 4. The coil plane 18 and the magnet plane 16 are parallel relative to a direction extending perpendicular to the coil plane 18.

The coil plane 18 intersects the first magnetic element 8 or the second magnetic element 12. Thus, the coil plane 18 intersects the first magnetic element 8 of the hearing device 6, i.e. the coil plane 18 intersects the hearing device 6. Alternatively or additionally, the coil plane 18 may intersect the second magnetic element 12 of the charging device 4, i.e. the coil plane 18 intersects the charging device 4.

A transition 54 at the outside surfaces of e.g. a connection interface of the charging device 4 and e.g. a faceplate of the hearing device 6 between the coil plane 18 and the magnet plane 16 may be square-shaped as shown in fig. 4c, or rounded as shown in fig. 4b, or tapered as shown in fig. 4a, as seen in a cross sectional view. The transition 54 is the change/design in the mechanical shape of the surfaces, e.g. at a protrusion or recess in the hearing device 6 and/or charging device 4. The transition 54, e.g. the shape of the transition, ensures a good connection between the hearing device and the charging device. When the transition 54 has a specific shape, e.g. square-shaped or rounded or tapered, then the hearing device and the charging device can only be attached or connected when they match at the specific shape. A specific shape at the transition 54 thus ensures a specific mechanical connection, and thereby a good alignment and thereby optimal wireless charging of the hearing device by the charging device. Due to the transition, there is only one possible attachment arrangement between the hearing device and the charging device, and thereby the mechanical shape ensures that the first set of coils 10 of the hearing device 6 is properly aligned with the second set of coils 14 of the charging device 4, and thus that the wireless charging is optimal, when the hearing device is attached to the charging device.

Fig. 4d furthermore shows an example where the hearing device 6 comprises the first magnetic element, such as a first primary magnetic element 8', and the hearing device 6 also comprises a first secondary magnetic element 9, which is also used for magnetic attraction with a corresponding magnetic element 60 of the charging device 4. The first secondary magnetic element 9 is a magnet. The magnet may be a permanent magnet. The first secondary magnetic element 56 may be made of iron, such as pure iron, or may be made of the alloy steel, which comprises iron, such as the type of steel called ferrite stainless steel.

Furthermore, the charging device 4 comprises the second magnetic element, such as a second primary magnetic element 12', and the charging device 4 also comprises a second secondary magnetic element 60, which also used for magnetic attraction with a corresponding magnetic element 9 of the hearing device 6. The second secondary magnetic element 60 is a magnet. The magnet may be a permanent magnet. The second secondary magnetic element 60 may be made of iron, such as pure iron, or may be made of the alloy steel, which comprises iron, such as the type of steel called ferrite stainless steel.

The hearing device 6 further comprises a first tertiary magnetic element 58, which is used for magnetic attraction with a corresponding magnetic element 62 of the charging device 4. The charging device 4 also comprises a second tertiary magnetic element 62, which is used for magnetic attraction with the corresponding magnetic element 58 of the hearing device 6.

The attachment, connection and alignment between the hearing device 6 and the charging device 4 may be further improved when there are two or more magnetic elements in both the hearing device 6 and the charging device 6.

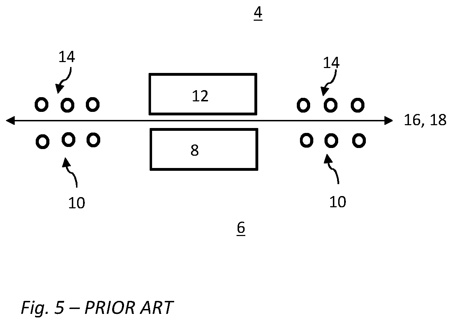

Fig. 5 shows an example of prior art, where the magnet plane 16 and the coil plane 18 are the same, coinciding, overlapping, because the magnetic elements 8, 12 of the hearing device 6 and charging device 4 are arranged on the same plane as the first and second sets of coils 10, 14 of the hearing device and charging device, when the hearing device and charging device are attached for charging of the hearing device.

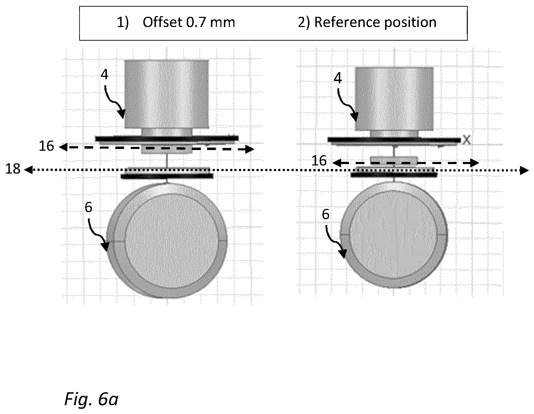

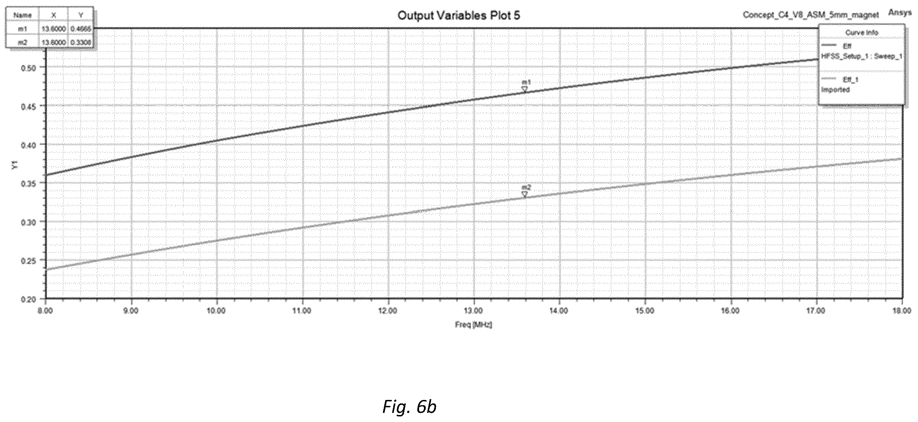

Fig 6a and 6b illustrate the improvement over prior art.

Fig. 6a schematically illustrates the present invention to the left 1), where the magnet plane 16 is different/offset from the coil plane 18 by 0.7 mm. To the right 2) is shown the prior art/reference position, where there is no/less difference/offset between the magnet plane 16 and the coil plane 18.

Fig. 6b illustrates the transmission efficiency on the y-axis for different frequencies at the x-axis. Transmission efficiency describes how efficiently the power is transferred from the transmitter coil to the receiver coil. The transmitter coil is in the charging device 4. The receiver coil is in the hearing device 6. The transmission efficiency may be understood as a charging efficiency. Fig. 6b shows two graphs, where the bottom graph is for the prior art/reference, and where the top graph is for the present invention, which shows that when the magnet plane 16 is offset with 0.7 mm distance from the coil plane 18, the improvement in efficiency is going from 33% to 46 % compared to the prior art/reference position, at a frequency of 13.6 MHz.

Thus, this shows that when the magnet plane 16 is different/offset from the coil plane 18, this ensures a good alignment between the hearing device 6 and the charging device 4, when they are attached to each other, and a good alignment ensures improved/optimal wireless charging of the hearing device 6 by the charging device 4.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### ITEMS:

1. A system comprising a charging device and a hearing device, wherein the charging device is configured to receive the hearing device to wirelessly charge the hearing device,
   wherein the hearing device comprises a first magnetic element and a first set of coils,
   wherein the charging device comprises a second magnetic element and a second set of coils, wherein the first magnetic element and the second magnetic element are configured for magnetically attracting each other for attaching the hearing device to the charging device,
   wherein the second set of coils is configured for wirelessly charging the first set of coils, when the hearing device is attached to the charging device by the first magnetic element and the second magnetic element, and
   wherein the first magnetic element and the second magnetic element are configured to attach at a magnet plane, and wherein the magnet plane is different from a coil plane, where the coil plane is the plane where the first set of coils and the second set of coils are aligned/arranged, when the hearing device is received by the charging device for wireless charging of the hearing device.
2. The system according to any of the preceding items, wherein the charging device is configured for inductive charging of the hearing device.
3. The system according to any of the preceding items, wherein the hearing device and the charging device are configured for near-field communication, NFC, being a set of communication protocols that enables communication between the hearing device and the charging device within a distance of 4 centimetres or less.
4. The system according to any of the preceding items, wherein the near-field communication, NFC, is configured to enable the wireless charging and to support data transmission between the charging device and the hearing device.
5. The system according to any of the preceding items, wherein each of the first set of coils and the second set of coils comprise electromagnetic coils.
6. The system according to any of the preceding items, wherein the first magnetic element and the second magnetic element are configured for aligning the first set of coils with the second set of coils at the coil plane.
7. The system according to any of the preceding items, wherein the magnet plane is different from the coil plane by the magnet plane being configured to be arranged with an offset/distance/displacement relative to the coil plane in a direction extending perpendicular to the coil plane.
8. The system according to any of the preceding items, wherein the coil plane and the magnet plane are parallel.
9. The system according to any of the preceding items, wherein the coil plane intersects the first magnetic element or the second magnetic element.
10. The system according to any of the preceding items, wherein the first magnetic element is arranged in a protrusion in a housing of the hearing device, and wherein the second magnetic element is arranged in a recess in the body of the charging device, whereby the magnet plane is protruding or indented relative to the coil plane.
11. The system according to any of the preceding items, wherein the first magnetic element is arranged in a recess in a housing of the hearing device, and wherein the second magnetic element is arranged in a protrusion in the body of the charging device, whereby the magnet plane is protruding or indented relative to the coil plane.
12. The system according to any of the preceding items, wherein the charging device comprises a connection interface, wherein the connection interface comprises the second magnetic element and the second set of coils, and
   wherein the hearing device comprises a faceplate, wherein the faceplate comprises the first magnetic element and the first set of coils, and
   wherein outside surfaces of the connection interface and the faceplate are configured to abut each other at a surface plane;
   and wherein, at the positions of the first and second sets of coils, the coil plane is aligned with the surface plane, and the magnet plane is un-aligned with the surface plane.
13. The system according to any of the preceding items, wherein a transition at the outside surfaces of the connection interface and the faceplate between the coil plane and the magnet plane is square-shaped or rounded or tapered in a cross sectional view.
14. A hearing device configured to be worn in/at an ear of a user, wherein the hearing device is configured to be received by a charging device for wirelessly charging the hearing device,
   wherein the hearing device comprises a first magnetic element and a first set of coils,
   where the first magnetic element is configured for magnetically attracting with a second magnetic element of the charging device for attaching the hearing device to the charging device,
   wherein the first set of coils are configured to be wirelessly charged by a second set of coils of the charging device, when the hearing device is attached to the charging device by the first magnetic element magnetically attracting with the second magnetic element of the charging device, and
   wherein the first magnetic element is configured to attach with the second magnetic element of the charging device at a magnet plane, and wherein the magnet plane is different from a coil plane, where the coil plane is the plane where the first set of coils is aligned/arranged with the second set of coils of the charging device, when the hearing device is received by the charging device for wireless charging of the hearing device.
15. The hearing device according to the preceding item, wherein the hearing device is an in-the-ear (ITE) hearing device, a completely-in-canal (CIC) hearing device or a behind-the-ear (BTE) haring device.
16. A charging device configured to receive a hearing device for wirelessly charging of the hearing device,
   wherein the charging device comprises a second magnetic element and a second set of coils,
   wherein the second magnetic elements is configured for magnetically attracting with a first magnetic element of the hearing device for attaching the hearing device to the charging device,
   wherein the second set of coils is configured for wirelessly charging a first set of coils of the hearing device, when the hearing device is attached to the charging device by the second magnetic element magnetically attracting with the first magnetic element of the hearing device, and
   wherein the second magnetic element is configured to attach with the first magnetic element at a magnet plane, and wherein the magnet plane is different from a coil plane, where the coil plane is the plane where the second set of coils is aligned/arranged with the first set of coils of the hearing device, when the hearing device is received by the charging device for wireless charging of the hearing device.

### LIST OF REFERENCES

2 system
4 charging device
6, 6' hearing device
8, 8' first magnetic element (first primary magnetic element)
9 first secondary magnetic element
10, 10' first set of coils
12, 12' second magnetic element
14, 14' second set of coils
16, 16' magnet plane
18, 18' coil plane
20 NFC transceiver, TX, chip
22, 22' battery
24 platform of charging device
26 connecter part of charging device
30 surface, faceplate, bottom surface of the hearing device
32 connection interface of charging device
34 surface plane
36 body of the charging device
38 protrusion of the hearing device
40 other surface plane
42 housing of the hearing device
44 recess in the body of the charging device
46 direction extending perpendicular to the coil plane
48 insertion direction of the hearing device into the charging device
50 magnet attachment surface of first magnetic element
52 magnet attachment surface of second magnetic element
54 transition
58 first tertiary magnetic element
60 second secondary magnetic element
62 second tertiary magnetic element

## Claims

1. A system comprising a charging device and a hearing device, wherein the charging device is configured to receive the hearing device to wirelessly charge the hearing device,
wherein the hearing device comprises a first magnetic element and a first set of coils,
wherein the charging device comprises a second magnetic element and a second set of coils,
wherein the first magnetic element and the second magnetic element are configured for magnetically attracting each other for attaching the hearing device to the charging device,
wherein the second set of coils is configured for wirelessly charging the first set of coils, when the hearing device is attached to the charging device by the first magnetic element and the second magnetic element, and
wherein the first magnetic element and the second magnetic element are configured to attach at a magnet plane, and wherein the magnet plane is different from a coil plane, where the coil plane is the plane where the first set of coils and the second set of coils are aligned/arranged, when the hearing device is received by the charging device for wireless charging of the hearing device.

2. The system according to any of the preceding claims, wherein the charging device is configured for inductive charging of the hearing device.

3. The system according to any of the preceding claims, wherein the hearing device and the charging device are configured for near-field communication, NFC, being a set of communication protocols that enables communication between the hearing device and the charging device within a distance of 4 centimetres or less.

4. The system according to any of the preceding claims, wherein the near-field communication, NFC, is configured to enable the wireless charging and to support data transmission between the charging device and the hearing device.

5. The system according to any of the preceding claims, wherein each of the first set of coils and the second set of coils comprise electromagnetic coils.

6. The system according to any of the preceding claims, wherein the first magnetic element and the second magnetic element are configured for aligning the first set of coils with the second set of coils at the coil plane.

7. The system according to any of the preceding claims, wherein the magnet plane is different from the coil plane by the magnet plane being configured to be arranged with an offset/distance/displacement relative to the coil plane in a direction extending perpendicular to the coil plane.

8. The system according to any of the preceding claims, wherein the coil plane and the magnet plane are parallel.

9. The system according to any of the preceding claims, wherein the coil plane intersects the first magnetic element or the second magnetic element.

10. The system according to any of the preceding claims, wherein the first magnetic element is arranged in a protrusion in a housing of the hearing device, and wherein the second magnetic element is arranged in a recess in the body of the charging device, whereby the magnet plane is protruding or indented relative to the coil plane.

11. The system according to any of the preceding claims, wherein the first magnetic element is arranged in a recess in a housing of the hearing device, and wherein the second magnetic element is arranged in a protrusion in the body of the charging device, whereby the magnet plane is protruding or indented relative to the coil plane.

12. The system according to any of the preceding claims, wherein the charging device comprises a connection interface, wherein the connection interface comprises the second magnetic element and the second set of coils, and
wherein the hearing device comprises a faceplate, wherein the faceplate comprises the first magnetic element and the first set of coils, and
wherein outside surfaces of the connection interface and the faceplate are configured to abut each other at a surface plane;
and wherein, at the positions of the first and second sets of coils, the coil plane is aligned with the surface plane, and the magnet plane is un-aligned with the surface plane.

13. The system according to any of the preceding claims, wherein a transition at the outside surfaces of the connection interface and the faceplate between the coil plane and the magnet plane is square-shaped or rounded or tapered in a cross sectional view.

14. A hearing device configured to be worn in/at an ear of a user, wherein the hearing device is configured to be received by a charging device for wirelessly charging the hearing device,
wherein the hearing device comprises a first magnetic element and a first set of coils,
where the first magnetic element is configured for magnetically attracting with a second magnetic element of the charging device for attaching the hearing device to the charging device,
wherein the first set of coils are configured to be wirelessly charged by a second set of coils of the charging device, when the hearing device is attached to the charging device by the first magnetic element magnetically attracting with the second magnetic element of the charging device, and
wherein the first magnetic element is configured to attach with the second magnetic element of the charging device at a magnet plane, and wherein the magnet plane is different from a coil plane, where the coil plane is the plane where the first set of coils is aligned/arranged with the second set of coils of the charging device, when the hearing device is received by the charging device for wireless charging of the hearing device.

15. A charging device configured to receive a hearing device for wirelessly charging of the hearing device,
wherein the charging device comprises a second magnetic element and a second set of coils,
wherein the second magnetic elements is configured for magnetically attracting with a first magnetic element of the hearing device for attaching the hearing device to the charging device,
wherein the second set of coils is configured for wirelessly charging a first set of coils of the hearing device, when the hearing device is attached to the charging device by the second magnetic element magnetically attracting with the first magnetic element of the hearing device, and
wherein the second magnetic element is configured to attach with the first magnetic element at a magnet plane, and wherein the magnet plane is different from a coil plane, where the coil plane is the plane where the second set of coils is aligned/arranged with the first set of coils of the hearing device, when the hearing device is received by the charging device for wireless charging of the hearing device.
